# EUROPEAN PATENT SPECIFICATION

(11) **EP 3 389 213 B1**
(45) Date of publication and mention of the grant of the patent: **17.02.2021**
(21) Application number: 18151622.0
(22) Date of filing: 29.11.2012
(51) Int. Cl.: H04L 5/00, H04W 72/04

(54) **METHOD AND DEVICE FOR RECEIVING ENHANCED PHYSICAL DOWNLINK CONTROL CHANNEL E-PDCCH**
VERFAHREN UND VORRICHTUNG ZUR ÜBERTRAGUNG VON INFORMATIONEN AUF EINEM ERWEITERTEN PHYSIKALISCHEN DOWNLINK-STEUERKANAL
PROCÉDÉ ET DISPOSITIF DE RÉCEPTION DE CANAL DE COMMANDE DE LIAISON DESCENDANTE PHYSIQUE AMÉLIORÉE E-PDCCH

(43) Date of publication of application: 17.10.2018
(62) Divisional of application: 12835724.1
(73) Proprietor: Huawei Technologies Co., Ltd., Longgang District Shenzhen, Guangdong 518129 (CN)
(72) Inventor: GAO, Chi, Shenzhen, Guangdong 518129 (CN); ZHOU, Yongxing, Shenzhen, Guangdong 518129 (CN); LIU, Jianghua, Shenzhen, Guangdong 518129 (CN); WU, Qiang, Shenzhen, Guangdong 518129 (CN)
(74) Representative: Maiwald Patent- und Rechtsanwaltsgesellschaft mbH

(56) References cited:
- EP-A1- 2 761 959
- EP-A1- 2 827 663
- EP-A2- 2 584 731
- EP-A2- 2 706 680
- SAMSUNG: "Discussion on ePDCCH Design Issues", 3GPP DRAFT; R1-112517 EPDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537597,
- LG ELECTRONICS: "Discussions on Downlink Control Signaling Enhancement", 3GPP DRAFT; R1-112479_LG_DL CONTROL SIGNAL ENHANCEMENT IN REL-11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 18 August 2011 (2011-08-18), XP050537819, [retrieved on 2011-08-18]
- ETRI: "Discussions on enhanced PDCCH structure", 3GPP DRAFT; R1-112211 EPDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537374, [retrieved on 2011-08-16]

## Description

### TECHNICAL FIELD

The present invention relates to the field of communications technologies, and in particular, to a method and a device for transmitting an enhanced physical downlink control channel E-PDCCH.

### BACKGROUND

In a long term evolution (Long Term Evolution, LTE) system, specific transmission manners of downlink data transmission and uplink data transmission are decided by a base station. The base station notifies a terminal of downlink or uplink transmission manners and some other control information in a manner of sending downlink control information (Downlink Control Information, DCI) through a physical downlink control channel (Physical Downlink Control Channel, PDCCH).
The Article by SAMSUNG: titled "Discussion on ePDCCH Design Issues", 3GPP DRAFT; R1-112517 EPDCCH, 3RD GENERATION PARTNERSHIP PROJECT (3GPP), MOBILE COMPETENCE CENTRE ; 650, ROUTE DES LUCIOLES; F-06921 SOPHIA- ANTIPOLIS CEDEX; FRANCE, vol. RAN WG1, no. Athens, Greece; 20110822, 16 August 201 1 (201 1 -08-16), XP050537597 describes techniques for on the enhanced DL control channel aspects and explores several design issues. Preliminary comparisons are presented among possible design alternatives.

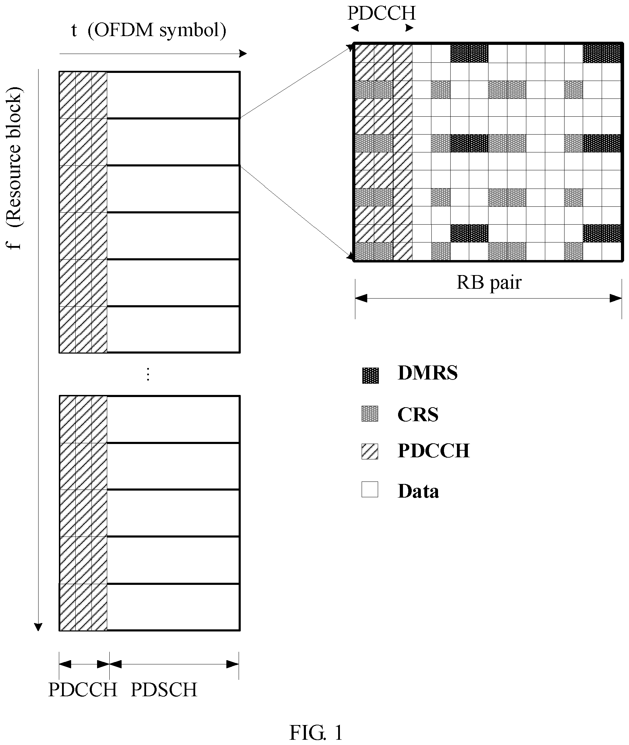

Specifically, in the LTE system, downlink resources occupied by each downlink channel are as shown in FIG. 1, where:

Each resource block pair (RB pair) includes 14 orthogonal frequency division multiplexing (Orthogonal Frequency Division Multiplexing, OFDM) symbols in a time domain and includes 12 sub-carriers in a frequency domain. According to a configuration, the PDCCH may occupy first 3 OFDM symbols, and that the first 3 symbols are occupied is taken as an example in the following in this specification. Control information sent by the base station to all terminals is transmitted in the first 3 OFDM symbols, where a cell-specific reference signal (Cell-Specific RS, CRS) is included. A downlink shared channel (Physical Downlink Shared Channel, PDSCH) occupies the remaining 11 OFDM symbols, where a demodulation reference signal (Demodulation RS, DMRS) and a data signal are included.

Resources occupied by the PDCCH take a control channel element (Control Channel Element, CCE) as a resource unit, and each CCE occupies 36 resource elements (Resource Element, RE). According to differences of channel quality and a control information size, resources occupied by each PDCCH may be aggregation of 1, 2, 4, or 8 CCEs.

In long term evolution-advanced (LTE-Advanced, LTE-A), because a multi-user transmission technology is enhanced and a coordinated multiple point technology is introduced, the number of users that may be served in each cell is increased, and correspondingly, the number of users corresponding to data included in each data transmission is increased. Therefore, the first 3 symbols occupied by the PDCCH need to bear control information of more users, which may cause performance of the PDCCH to decrease and make the terminal unable to receive the control information correctly.

### SUMMARY

For the foregoing problems existing in the prior art, embodiments of the present invention, in one aspect, provide a method and a device for transmitting an enhanced physical downlink control channel E-PDCCH, so as to obtain better enhanced PDCCH performance in a case that time-frequency resources are made full use of; and in another aspect, provide a method and a device for receiving an enhanced physical downlink control channel E-PDCCH, so as to reduce the number of times of blind detection and improve detection efficiency.

The invention is solely defined by the appended claims. In the following, references to embodiments not falling within the scope of the claims are to be understood as examples useful for understanding the invention.

In the method and the device for transmitting an enhanced physical downlink control channel provided by the embodiments of the present disclosure, at a network side, at least one E-PDCCH unit is mapped to a pre-determined position in at least one RB pair, where a size of resources of each RB pair is greater than or equal to a size of resources occupied by two E-PDCCH units, and resources occupied by each E-PDCCH unit in an RB pair include a part of resources of each resource block in the RB pair; and the E-PDCCH is transmitted on mapped time-frequency resources in the RB pair, so that the E-PDCCH is mapped to physical resources, and the foregoing E-PDCCH is transmitted on the mapped time-frequency resources in the RB pair, thereby making full use of resources and obtaining better E-PDCCH performance.

Correspondingly, in the method and the device for receiving an enhanced physical downlink control channel provided by the embodiments of the present disclosure, at a terminal side, a pre-determined position to which the E-PDCCH unit of the E-PDCCH used for scheduling the terminal is mapped in a resource block and which is notified by a network side is obtained; and the E-PDCCH unit used for scheduling the terminal in the resource block pair is detected according to the pre-determined position, and the E-PDCCH used for scheduling the terminal is obtained, thereby reducing the number of times of blind detection and improving detection efficiency.

### BRIEF DESCRIPTION OF DRAWINGS

To illustrate the technical solutions in the embodiments of the application or in the prior art more clearly, accompanying drawings required to be used in the embodiments are briefly introduced in the following. The accompanying drawings in the following description are only some examples recorded in the present invention, and persons of ordinary skill in the art may further obtain other drawings according to these accompanying drawings.
FIG. 1 is a schematic diagram of downlink resources occupied by each downlink channel in an existing LTE system;
FIG. 2 is a schematic diagram of downlink resources occupied by each downlink channel of an E-PDCCH and a PDSCH in an existing LTE-A system;
FIG. 3 is a flow chart of a method for transmitting an enhanced physical downlink control channel according to an embodiment of the present invention;
FIG. 4 is a schematic diagram of time-frequency resource mapping in a case that a size of an E-PDCCH unit is the same as a size of a control channel element according to an embodiment of the present invention;
FIG. 5 is a schematic diagram of time-frequency resource mapping in a case that a size of an E-PDCCH unit is the same as a size of a control channel element according to an embodiment of the present invention;
FIG. 6 is a schematic diagram of time-frequency resource mapping in a case that a size of an E-PDCCH unit is different from a size of a control channel element according to an embodiment of the present invention;
FIG. 7 is a schematic diagram of mapping transmission of an E-PDCCH according to an embodiment of the present invention;
FIG. 8 is a schematic structural diagram of a device for transmitting an enhanced physical downlink control channel according to an embodiment of the present invention;
FIG. 9 is a flow chart of a method for receiving an enhanced physical downlink control channel according to an embodiment of the present invention; and
FIG. 10 is a schematic structural diagram of a device for receiving an enhanced physical downlink control channel according to an embodiment of the present invention.

### DESCRIPTION OF EMBODIMENTS

In order to make persons skilled in the art better understand the solutions of the embodiments of the present invention, the embodiments of the present invention are further described in detail in the following with reference to the accompanying drawings and implementation manners.

For a requirement that in LTE-A, a PDCCH needs to bear control information of more users, PDCCH transmission may be enhanced. For ease of description, an enhanced PDCCH is referred to as an E-PDCCH. In order to maintain backward compatibility, namely, a terminal in each version before enhancement can identify its corresponding control information, an original PDCCH domain may be reserved. A new PDCCH domain, namely, an E-PDCCH domain, is developed for a terminal that can support an enhanced version.

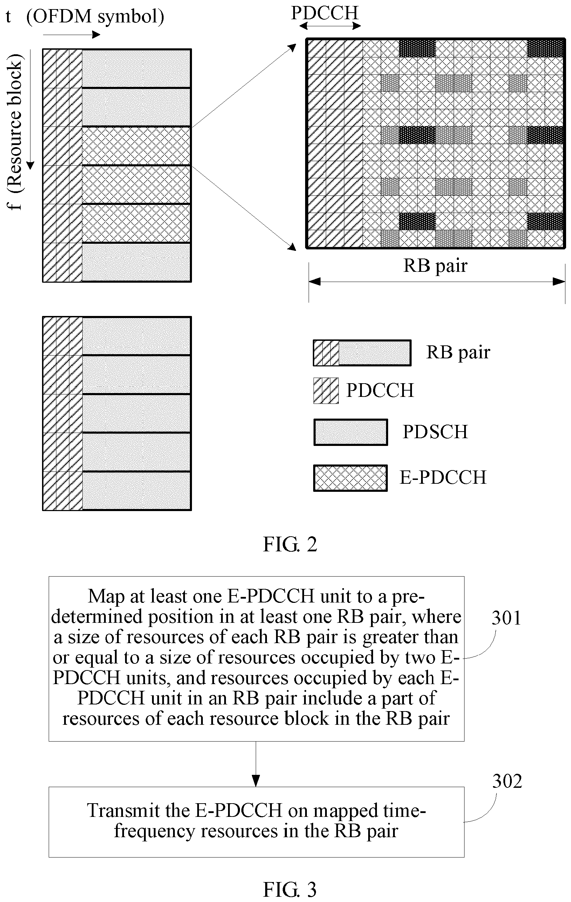

A method for transmitting an E-PDCCH is shown in FIG. 2, and each E-PDCCH resource unit occupies resources in an RB pair except for a PDCCH and a pilot.

If the method shown in FIG. 2 is adopted to transmit the E-PDCCH, each E-PDCCH resource unit is 104 REs, namely, 11 (OFDM symbol)×12RE-16 (cell-specific reference signal, CRS)-12 (demodulation reference signal DMRS)=104, while in a PDCCH domain for transmitting information originally, a resource unit of each PDCCH is 36 REs. It can be seen that, the resource unit of the E-PDCCH is much greater than the resource unit of the PDCCH. For some certain channel in a good condition or small control information, transmission in the E-PDCCH causes a waste of resources.

Therefore, the embodiments of the present invention provide a method and a device for transmitting a control channel, to map at least one E-PDCCH unit to a pre-determined position in at least one RB pair, where a size of resources of each RB pair is greater than or equal to a size of resources occupied by two E-PDCCH units, and resources occupied by each E-PDCCH unit in an RB pair include a part of resources of each resource block in the RB pair, thereby obtaining better E-PDCCH performance in a case that time-frequency resources are made full use of.

As shown in FIG. 3, FIG. 3 is a flow chart of a method for transmitting an enhanced physical downlink control channel according to an embodiment of the present invention, where the method includes the following steps.

Step 301: Map at least one E-PDCCH unit to a pre-determined position in at least one RB pair, where a size of resources of each RB pair is greater than or equal to a size of resources occupied by two E-PDCCH units, and resources occupied by each E-PDCCH unit in an RB pair include a part of resources of each resource block in the RB pair.

It should be noted that, the E-PDCCH includes at least one E-PDCCH unit.

Specifically, when the E-PDCCH includes multiple E-PDCCH units, multiple E-PDCCH units belonging to a same E-PDCCH may be mapped to an RB pair; and each E-PDCCH unit belonging to a same E-PDCCH may also be mapped to a same time-frequency resource position in an RB pair.

For each E-PDCCH unit of each E-PDCCH, an E-PDCCH unit of an E-PDCCH used for scheduling uplink data of a same terminal may be mapped to a first pre-determined position of an RB pair, and an E-PDCCH unit of an E-PDCCH used for scheduling downlink data of the terminal is mapped to a second pre-determined position of the RB pair. The first pre-determined position is known to the terminal scheduled by the E-PDCCH.

Step 302: Transmit the E-PDCCH on mapped time-frequency resources in the RB pair.

In the embodiment of the present invention, the following steps may be further included: notifying, in an explicit or implicit manner, the terminal of the pre-determined position to which the E-PDCCH unit of the E-PDCCH used for scheduling the terminal is mapped in the RB pair, so that the terminal detects, according to the pre-determined position, the E-PDCCH unit corresponding to the terminal in the RB pair, obtains the E-PDCCH belonging to the terminal, and further obtains information borne by the E-PDCCH.

Specifically, a base station side may notify the terminal of a pre-determined starting position of the E-PDCCH used for scheduling the terminal in the RB pair; or notify the terminal of the pre-determined position of the E-PDCCH unit of the E-PDCCH used for scheduling the terminal in the RB pair.

In an actual application, a base station may notify the terminal in an explicit or implicit manner, for example, the following notifying manners may be adopted:
explicit manner:
   (1) the base station sends signaling to the terminal, where the signaling includes the pre-determined position or the pre-determined position deduced through the signaling, for example, 0 or 1 is used for indicating resource position information of the E-PDCCH Unit in the RB pair; and
implicit manner:
   (2) the base station agrees with the terminal in advance on the pre-determined position of the E-PDCCH unit of the E-PDCCH of the terminal in the RB pair; and
   (3) the base station agrees with the terminal in advance on a function relationship (for example, an exclusive OR relationship) to indicate the pre-determined position of the E-PDCCH unit of the E-PDCCH used for scheduling the terminal in the RB pair, namely, the pre-determined position may be obtained through a function of other information, and the other information is information known to the base station and the terminal.

Definitely, other manners or parameters may also be adopted to indicate the resource position information of the E-PDCCH resource unit in the RB pair, which is not limited in the embodiment of the present invention.

In addition, when the terminal is notified explicitly, high layer signaling or physical layer signaling may be used. The signaling may be semi-static or dynamic, which is not limited in the embodiment of the present invention.

It should be noted that, in the embodiment of the present invention, a size of an E-PDCCH unit may be the same as a size of a control channel element, namely, 36 REs; and the size of the E-PDCCH unit may also be set randomly, for example, each RB pair is divided into M (M is an integer, for example, M=2) E-PDCCH units, so a size of each E-PDCCH unit is one-Mth of an RB pair. An RE belonging to each E-PDCCH may be an RE with continuous physical resources in the RB pair, and may also be an RE with discrete physical resources.

In the embodiment of the present invention, the at least one RB pair further includes mapped PDSCH data.

Various different manners for mapping the E-PDCCH unit in the embodiment of the present invention are further illustrated in detail in the following.

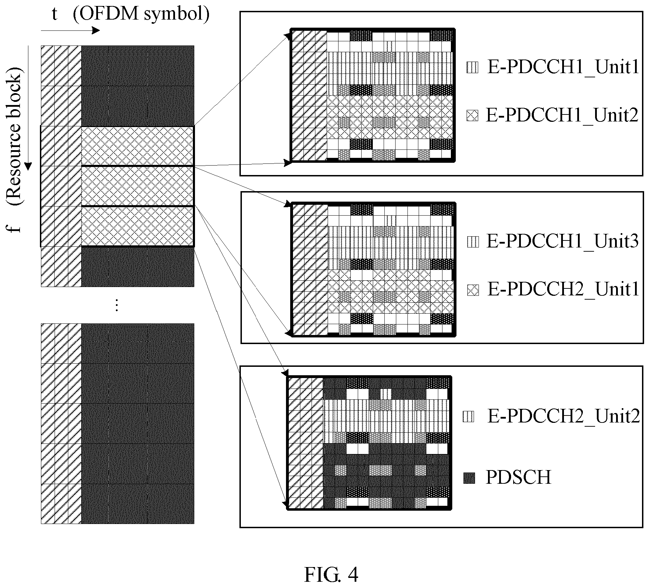

As shown in FIG. 4, FIG. 4 is a schematic diagram of time-frequency resource mapping applying an embodiment of the present invention.

In FIG. 4, an E-PDCCH1 represents a sent E-PDCCH, the E-PDCCH1 is aggregated by multiple E-PDCCH units, and the multiple E-PDCCH units are: an E-PDCCH1_Unit1, an E-PDCCH1_Unit2, and an E-PDCCH1_Unit3.

An E-PDCCH2 represents another sent E-PDCCH, the E-PDCCH2 is aggregated by two E-PDCCH units, and the two E-PDCCH units are: an E-PDCCH2_Unit1 and an E-PDCCH2_Unit2.

In the example, multiple E-PDCCH units belonging to a same E-PDCCH may be mapped to an RB pair, and may also be mapped to multiple RB pairs. As shown in FIG. 4, the E-PDCCH1_Unit1 and the E-PDCCH1_Unit2 are mapped to an RB pair; and the E-PDCCH2_Unit1 and the E-PDCCH2_Unit2 are mapped to two different RB pairs separately. In other words, multiple E-PDCCH units mapped to a same RB pair may belong to a same E-PDCCH, and may also belong to different E-PDCCHs. As shown in FIG. 4, the E-PDCCH1_Unit1 and the E-PDCCH1_Unit2 that are mapped to a first RB pair belong to a same E-PDCCH; and the E-PDCCH1_Unit3 and the E-PDCCH2_Unit1 that are mapped to a second RB pair belong to two different E-PDCCHs separately.

In addition, in the example, an E-PDCCH unit and PDSCH data may be mapped to a same RB pair. As shown in FIG. 4, the E-PDCCH2_Unit2 and the PDSCH data are mapped to a third RB pair.

In the example, a size of an E-PDCCH unit is the same as a size of a CCE in a PDCCH, a base station and a terminal may reuse a resource mapping manner of the CCE in a PDCCH domain, and at the same time, the E-PDCCH unit and a PDSCH, or, the E-PDCCH unit and a resource unit of another E-PDCCH may also be multiplexed in a same RB pair, thereby effectively saving time-frequency resources in minimum complexity.

In the foregoing mapping manner, the terminal may determine, through blind detection, the E-PDCCH belonging to the terminal. Assuming that a terminal 1 does not know a starting position of an E-PDCCH1 corresponding to the terminal 1 and the number of resources occupied by the E-PDCCH1, and the starting position may be an upper half or a lower half of the first RB pair or the second RB pair or the third RB pair, when performing blind detection on the starting position, the terminal 1 needs to detect the upper half or the lower half of the three RB pairs separately. It can be known that, the terminal 1 needs to perform blind detection on 6 resource positions, so a computation amount of the terminal 1 is large.

Therefore, in this embodiment, the base station side may notify the terminal of a part of position information of the E-PDCCH, so as to reduce the number of times of blind detection. For example, the terminal 1 is notified of a position of the starting position of the E-PDCCH in an RB pair, and taking FIG. 4 as an example, the upper half and the lower half in the RB pair are represented as 0 and 1 respectively, the terminal 1 is notified of resource starting position information 0 of the E-PDCCH1, and a terminal 2 is notified of resource starting position information 1 of the E-PDCCH, so the terminal 1 performs blind detection on its corresponding E-PDCCH at the upper half of the first RB pair, the second RB pair and the third RB pair, and only needs to perform detection 3 times, thereby reducing half of the number of times of blind detection and reducing complexity of the terminal. A process for the terminal 2 to detect the E-PDCCH2 is similar to the foregoing.

Similarly, in a case that M E-PDCCH resource units may be mapped in each RB pair, starting position information of the E-PDCCH may also be sent to the terminal. The starting information position includes M states, which are used for indicating M E-PDCCH resource unit positions in each RB pair.

A method for the base station to notify the terminal of position information of the E-PDCCH may be explicitly notifying, namely, sending signaling by the base station, where the signaling is used for indicating the position information of the E-PDCCH and the signaling may be physical layer signaling or high layer signaling; and may also be implicitly notifying, namely, agreeing, by the base station and in an agreement manner, with the terminal on the position information of the E-PDCCH of the terminal or on a rule of obtaining the position information of the E-PDCCH from other signaling. For example, a service identification serial number of a certain communication of the terminal is information known to the base station and the terminal, and a function relationship between the position information and the service identification serial number may be agreed, for example, an exclusive OR relationship. If an obtained result is 0, the position of the E-PDCCH corresponding to the terminal in the RB pair is a first one in optional positions, and if the obtained result is 1, the position of the E-PDCCH corresponding to the terminal in the RB pair is a second one in the optional positions, and the rest may be deduced by analogy.

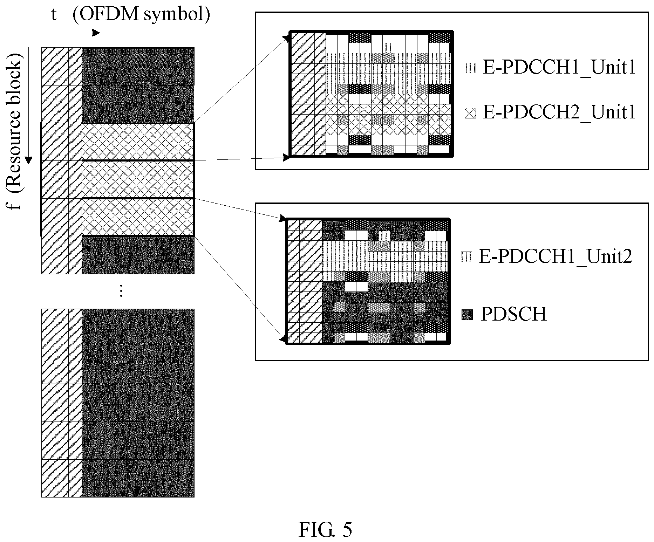

As shown in FIG. 5, FIG. 5 is another schematic diagram of time-frequency resource mapping applying an embodiment of the present invention.

In FIG. 5, an E-PDCCH1 represents a sent E-PDCCH, the E-PDCCH1 is aggregated by multiple E-PDCCH units, and the multiple E-PDCCH units are: an E-PDCCH1_Unit1, an E-PDCCH1_Unit2, and an E-PDCCH1_Unit3.

An E-PDCCH2 represents another sent E-PDCCH, the E-PDCCH2 is aggregated by two E-PDCCH units, and the two E-PDCCH units are: an E-PDCCH2_Unit1 and an E-PDCCH2_Unit2.

In the example, multiple E-PDCCH units belonging to a same E-PDCCH are separately mapped to different RB pairs, namely, each RB pair only includes an E-PDCCH unit belonging to a certain E-PDCCH. As shown in FIG. 5, the E-PDCCH1_Unit1 and the E-PDCCH1_Unit2 that belong to the E-PDCCH1 are separately mapped in different RB pairs.

In the example, a size of an E-PDCCH unit is the same as a size of a CCE in a PDCCH, a base station and a terminal may reuse a resource mapping manner of the CCE in a PDCCH domain, and at the same time, the E-PDCCH unit and a PDSCH, or, the E-PDCCH unit and a resource unit of another E-PDCCH may also be multiplexed in a same RB pair, thereby effectively saving time-frequency resources in minimum complexity.

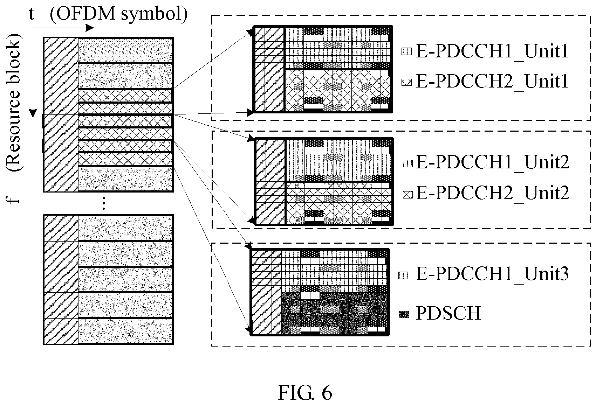

It should be noted that, the size of the E-PDCCH unit may also be different from the size of the CCE in the PDCCH, for example, an E-PDCCH unit is 1/2 of an RB pair, as shown in FIG. 6.

Furthermore, one or more E-PDCCH units belonging to a same E-PDCCH may occupy a same time-frequency resource position in different RB pairs. As shown in FIG. 5, the E-PDCCH1_Unit1 and the E-PDCCH1_Unit2 occupy a same time-frequency resource position in first and second RB pairs. For another example, assuming that each RB pair has N resource positions to which the E-PDCCH unit may be mapped, a position is specified for each E-PDCCH or each terminal, so that all E-PDCCH units occupy a same time-frequency resource position in each mapped RB pair.

As shown in FIG. 5, each RB pair has two positions to which an E-PDCCH resource unit may be mapped, which are referred to as a position 1 and a position 2, so the E-PDCCH1_Unit1 and the E-PDCCH1_Unit2 that belong to the E-PDCCH1 may be mapped to the position 1 of the RB pair, and the E-PDCCH2_Unit1 belonging to the E-PDCCH2 may be mapped to the position 2 of the RB pair.

Similarly, in the foregoing example, the E-PDCCH unit and PDSCH data may be mapped to a same RB pair. As shown in FIG. 5, the E-PDCCH1_Unit2 and the PDSCH are mapped to the second RB pair.

In the foregoing mapping manner, the terminal may determine, through blind detection, the E-PDCCH belonging to the terminal. Taking FIG. 5 as an example, assuming that a terminal 1 does not know a starting position of an E-PDCCH1 corresponding to the terminal 1 and the number of resources occupied by the E-PDCCH, and the starting position may be a position 1 or a position 2 of the first RB pair or the second RB pair or the third RB pair, when performing blind detection on the starting position, the terminal needs to detect the position 1 or the position 2 of the three RB pairs separately. It can be known that, the terminal needs to perform blind detection on 6 resource positions, so a computation amount of the terminal is large.

Therefore, in this embodiment, one or more E-PDCCH units belonging to a same E-PDCCH may occupy a same time-frequency resource position in different RB pairs, so a base station side may notify the terminal of a time-frequency resource position occupied by an E-PDCCH belonging to a certain terminal in the RB pair, so that the terminal may reduce the number of times of blind detection. For example, in FIG. 5, the terminal 1 corresponding to the E-PDCCH1 knows that the resource position of the E-PDCCH1 in the RB pair is the position 1, so the terminal 1 performs blind detection on the E-PDCCH 1 only in the position 1 of the first RB pair, the second RB pair and the third RB pair, and only needs to perform detection 3 times, thereby reducing half of the number of times of blind detection and reducing complexity of the terminal. A process for a terminal 2 to detect the E-PDCCH2 is similar to the foregoing.

Similarly, in a case that N E-PDCCH resource units may be mapped in each RB pair, position information of the E-PDCCH may also be sent to the terminal. The starting information position includes N states, which are used for indicating N E-PDCCH resource unit positions in each RB pair.

A method for the base station to notify the terminal of position information of the E-PDCCH may be explicitly notifying, namely, sending signaling by the base station, where the signaling is used for indicating the position information of the E-PDCCH and the signaling may be physical layer signaling or high layer signaling; and may also be implicitly notifying, namely, agreeing, by the base station and in an agreement method, with the terminal on the position information of the E-PDCCH of the terminal or on a rule of obtaining the position information of the E-PDCCH from other signaling. For example, a service identification serial number of a certain communication of the terminal is information known to the base station and the terminal, and a function relationship between the position information and the service identification serial number may be agreed, for example, an exclusive OR relationship. If an obtained result is 0, the position of the E-PDCCH corresponding to the terminal in the RB pair is a first one in optional positions, and if the obtained result is 1, the position of the E-PDCCH corresponding to the terminal in the RB pair is a second one in the optional positions, and the rest may be deduced by analogy.

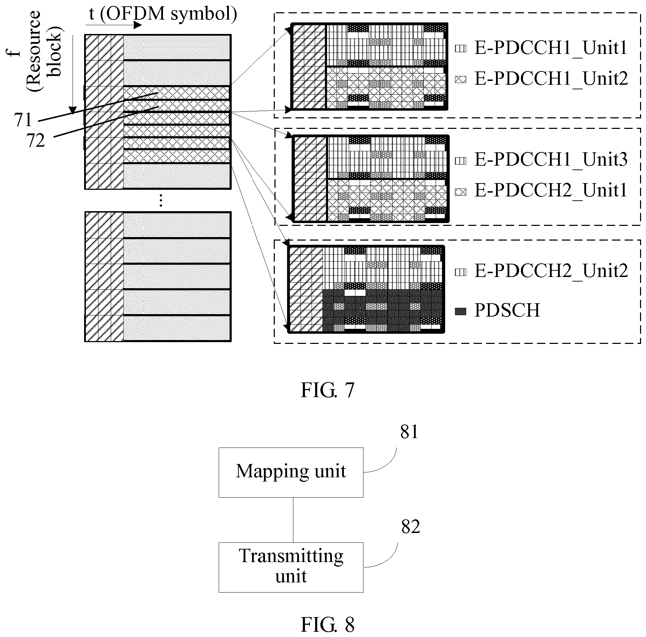

As shown in FIG. 7, FIG. 7 is a schematic diagram of mapping transmission of an E-PDCCH according to an embodiment of the present invention.

In the example, an E-PDCCH unit is 1/2 of an RB pair. In the figure:
an E-PDCCH1 represents a sent E-PDCCH, the E-PDCCH1 is aggregated by multiple E-PDCCH units, and the multiple E-PDCCH units are: an E-PDCCH1_Unit1, an E-PDCCH1_Unit2, and an E-PDCCH1_Unit3; and
an E-PDCCH2 represents another sent E-PDCCH, the E-PDCCH2 is aggregated by two E-PDCCH units, and the two E-PDCCH units are: an E-PDCCH2_Unit1 and an E-PDCCH2_Unit2.

In the example, multiple E-PDCCH units belonging to a same E-PDCCH may be mapped to an RB pair, and may also be mapped to multiple RB pairs. As shown in FIG. 7, the E-PDCCH1_Unit1 and the E-PDCCH1_Unit2 are mapped to an RB pair; and the E-PDCCH2_Unit1 and the E-PDCCH2_Unit2 are mapped to two different RB pairs separately. In other words, multiple E-PDCCH units mapped to a same RB pair may belong to a same E-PDCCH, and may also belong to different E-PDCCHs. As shown in FIG. 7, the E-PDCCH1 Unit1 and the E-PDCCH1_Unit2 mapped to a first RB pair belong to a same E-PDCCH; and the E-PDCCH1_Unit3 and the E-PDCCH2_Unit1 mapped to a second RB pair belong to two different E-PDCCHs separately.

Assuming that a first part 71 which is of the RB pair and is occupied by each E-PDCCH is transmitted by using an antenna port 1, and a second part 72 is transmitted by using an antenna port 2, the E-PDCCH1_Unit1, the E-PDCCH1_Unit3 and the E-PDCCH2_Unit2 shown in FIG. 7 are transmitted through the antenna port 1, and the E-PDCCH1_Unit2 and the E-PDCCH2_Unit1 are transmitted through the antenna port 2. That is to say, the multiple E-PDCCH units belonging to the same E-PDCCH may be transmitted through multiple antenna ports, namely, when the multiple E-PDCCH units included in the RB pair are used for scheduling different terminals, the E-PDCCH units used for scheduling different terminals are transmitted by using different antenna ports, thereby obtaining a space diversity gain of the E-PDCCH and improving transmission performance of the E-PDCCH.

It should be noted that, in each of the foregoing examples, mapping the E-PDCCH unit to the RB pair refers to mapping the E-PDCCH unit to time-frequency resources in the RB pair except for reference signal (Reference Signal, RS) resources (including DMRS and CRS). Resources occupied by the DMRS may include existing most RS resources. Therefore, in an actual application, resources may be reserved according to most possible RS resources.

It can be seen that, in the method for transmitting a control channel in the embodiment of the present invention, at least one E-PDCCH unit is mapped to a pre-determined position in at least one RB pair, where a size of resources of each RB pair is greater than or equal to a size of resources occupied by two E-PDCCH units, and resources occupied by each E-PDCCH unit in the RB pair include a part of resources of each resource block in the RB pair, thereby obtaining better E-PDCCH performance in a case that time-frequency resources are made full use of.

Furthermore, transmitting multiple E-PDCCH units which are used for scheduling different terminals and are included in the RB pair through multiple antenna ports may obtain a space diversity gain of the E-PDCCH and improve transmission performance of the E-PDCCH.

Correspondingly, an embodiment of the present invention further provides a device for transmitting an enhanced physical downlink control channel E-PDCCH. As shown in FIG. 8, FIG 8 is a schematic structural diagram of the device.

In the embodiment, the DE-PDCCH includes at least one E-PDCCH unit, and the device includes:
a mapping unit 81, configured to map the at least one E-PDCCH unit to a pre-determined position in at least one RB pair, where a size of resources of each RB pair is greater than or equal to a size of resources occupied by two E-PDCCH units, and resources occupied by each E-PDCCH unit in an RB pair include a part of resources of each resource block in the RB pair; and
a transmitting unit 82, configured to transmit the E-PDCCH on mapped time-frequency resources in the RB pair.

In the embodiment of the present invention, the mapping unit 81 is specifically configured to map multiple E-PDCCH units belonging to a same E-PDCCH to an RB pair, or map each E-PDCCH unit belonging to an E-PDCCH to a same time-frequency resource position in an RB pair. For the foregoing different mapping manners, reference may be specifically made to the description in each of the foregoing examples, and details are not repeatedly described here.

When each E-PDCCH unit of each E-PDCCH is mapped to a pre-determined position in the at least one RB pair, the mapping unit 81 may perform mapping specifically according to the following manner: mapping an E-PDCCH unit of an E-PDCCH used for scheduling uplink data of a same terminal to a first pre-determined position of the RB pair, and mapping an E-PDCCH unit of an E-PDCCH used for scheduling downlink data of the terminal to a second pre-determined position of the RB pair.

It should be noted that, the foregoing pre-determined position is known to the terminal scheduled by the E-PDCCH.

In the embodiment of the present invention, a size of an E-PDCCH unit may be the same as a size of a control channel element, namely, 36 REs; and the size of the E-PDCCH unit may also be set randomly, for example, each RB pair is divided into M (M is an integer, for example, M=2) E-PDCCH units, so a size of each E-PDCCH unit is one-M^{th} of an RB pair. An RE belonging to each E-PDCCH may be an RE with continuous physical resources in the RB pair, and may also be an RE with discrete physical resources.

In addition, the at least one RB pair further includes mapped PDSCH data.

Furthermore, the device may further include: a notifying unit (not shown in the figure), configured to notify, in an explicit or implicit manner, a terminal of a pre-determined position to which the E-PDCCH unit used for scheduling the terminal is mapped in the RB pair.

In a specific application, the notifying unit may notify the terminal of a pre-determined starting position of the E-PDCCH used for scheduling the terminal in the resource pair; or notify the terminal of the pre-determined position of the E-PDCCH unit of the E-PDCCH used for scheduling the terminal in the RB pair.

The explicit manner includes: sending signaling to the terminal, where the signaling includes the pre-determined position or the pre-determined position is deduced through the signaling.

The implicit manner includes: agreeing with the terminal on the pre-determined position of the E-PDCCH unit of the E-PDCCH used for scheduling the terminal in the RB pair; or agreeing with the terminal on a function relationship to indicate the pre-determined position of the E-PDCCH unit of the E-PDCCH used for scheduling the terminal in the RB pair.

In the device for transmitting an enhanced physical downlink control channel in the embodiment of the present invention, at least one E-PDCCH unit is mapped to a pre-determined position in at least one RB pair, where a size of resources of each RB pair is greater than or equal to a size of resources occupied by two E-PDCCH units, and resources occupied by each E-PDCCH unit in an RB pair include a part of resources of each resource block in the RB pair, thereby obtaining better E-PDCCH performance in a case that time-frequency resources are made full use of.

In addition, the device may further include: a control unit (not shown in the figure), configured to, when the multiple E-PDCCH units included in the RB pair are used for scheduling different terminals, transmit the E-PDCCH units used for scheduling different terminals by using different antenna ports. In this way, a space diversity gain of the E-PDCCH may be obtained, and transmission performance of the E-PDCCH may be improved.

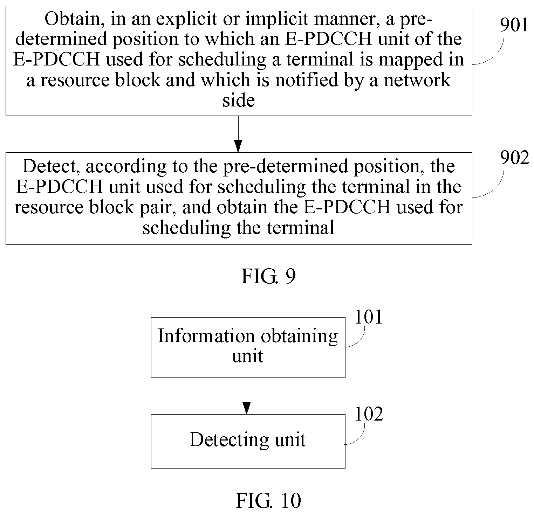

Correspondingly, an embodiment of the present invention further provides a method for receiving an enhanced physical downlink control channel. As shown in FIG. 9, FIG. 9 is a flow chart of the method.

In the embodiment, the E-PDCCH includes at least one E-PDCCH unit, and the method includes the following steps.

Step 901: Obtain, in an explicit or implicit manner, a pre-determined position to which an E-PDCCH unit of the E-PDCCH used for scheduling a terminal is mapped in a resource block and which is notified by a network side.

Specifically, the step may be obtaining a pre-determined starting position which is of the E-PDCCH used for scheduling the terminal in the resource pair and is notified by the network side; or obtaining a pre-determined position which is of the E-PDCCH unit of the E-PDCCH used for scheduling the terminal in the resource block pair and is notified by the network side.

The explicit manner includes: receiving signaling sent to the terminal by the network side, where the signaling includes the pre-determined position or the pre-determined position is deduced through the signaling.

The implicit manner may include the following two manners:
agreeing with the network side on the pre-determined position of the E-PDCCH unit of the E-PDCCH used for scheduling the terminal in the resource block pair; or
agreeing with the network side on a function relationship to indicate the pre-determined position of the E-PDCCH unit of the E-PDCCH used for scheduling the terminal in the resource block pair.

Definitely, the step may further include other manners, which is not limited in the embodiment of the present invention.

Step 902: Detect, according to the pre-determined position, the E-PDCCH unit used for scheduling the terminal in the resource block pair, and obtain the E-PDCCH used for scheduling the terminal.

It can be seen that, in the method for receiving an enhanced physical downlink control channel in the embodiment of the present invention, a pre-determined position to which the E-PDCCH unit of the E-PDCCH used for scheduling the terminal is mapped in a resource block and which is notified by a network side is obtained; and the E-PDCCH unit used for scheduling the terminal in the resource block pair is detected according to the pre-determined position, and the E-PDCCH used for scheduling the terminal is obtained, thereby reducing the number of times of blind detection and improving detection efficiency.

Correspondingly, an embodiment of the present invention further provides a device for receiving an enhanced physical downlink control channel. As shown in FIG. 10, FIG 10 is a schematic structural diagram of the device.

In the embodiment, the E-PDCCH includes at least one E-PDCCH unit, and the device includes:
an information obtaining unit 101, configured to obtain, in an explicit or implicit manner, a pre-determined position to which an E-PDCCH unit of the E-PDCCH used for scheduling a terminal is mapped in a resource block and which is notified by a network side; and
a detecting unit 102, configured to detect, according to the pre-determined position, the E-PDCCH unit used for scheduling the terminal in the resource block pair, and obtain the E-PDCCH used for scheduling the terminal.

In a specific application, the information obtaining unit 101 may obtain a pre-determined starting position which is of the E-PDCCH used for scheduling the terminal in the resource pair and is notified by the network side; or obtain a pre-determined position which is of the E-PDCCH unit of the E-PDCCH used for scheduling the terminal in the resource block pair and is notified by the network side.

The explicit manner may include: receiving signaling sent to the terminal by the network side, where the signaling includes the pre-determined position or the pre-determined position is deduced through the signaling.

The implicit manner may include the following two manners:
agreeing with the network side on the pre-determined position of the E-PDCCH unit of the E-PDCCH used for scheduling the terminal in the resource block pair; or
agreeing with the network side on a function relationship to indicate the pre-determined position of the E-PDCCH unit of the E-PDCCH used for scheduling the terminal in the resource block pair.

It can be seen that, in the device for receiving an enhanced physical downlink control channel in the embodiment of the present invention, a pre-determined position to which an E-PDCCH unit of the E-PDCCH used for scheduling the terminal is mapped in a resource block and which is notified by a network side is obtained; and the E-PDCCH unit used for scheduling the terminal in the resource block pair is detected according to the pre-determined position, and the E-PDCCH used for scheduling the terminal is obtained, thereby reducing the number of times of blind detection and improving detection efficiency.

The embodiments in the specification are described in a progressive manner, reference may be made to the same and similar part between the embodiments, and each embodiment focuses on illustrating the difference from other embodiments. Particularly, the device embodiments are similar to the method embodiments, so the description is simple, and reference may be made to the illustration of the method embodiments. The system embodiments in the foregoing description are merely exemplary. Units described as separate components may be or may not be physically separated. Components shown as units may be or may not be physical units, that is, may be located in one place, or may also be distributed to a number of network units. Part or all of the modules may be selected to achieve the objective of the solutions of the embodiments according to actual demands. Persons of ordinary skill in the art can understand and implement without creative efforts.

The embodiments of the present invention are described in detail. Specific implementation manners are used for describing the present invention in this specification. The foregoing description of the embodiments are merely used to help understand the methods and devices of the present invention. Meanwhile, persons of ordinary skill in the art may make modifications to the specific implementation manners and application ranges according to the idea of the present invention. In conclusion, the content of the specification shall not be construed as a limitation to the present invention. The invention is solely defined by the appended claims.

## Claims

1. A method for receiving an enhanced physical downlink control channel, E-PDCCH, wherein the E-PDCCH comprises at least one E-PDCCH unit, and the method comprises:
obtaining (901), by a terminal, a pre-determined position to which an E-PDCCH unit of the E-PDCCH used for scheduling the terminal is mapped in a resource block pair and which is notified by a network side; and
detecting (902), by the terminal according to the pre-determined position, the E-PDCCH unit in the resource block pair, and obtaining the E-PDCCH used for scheduling the terminal,
wherein a size of resources of the resource block pair is greater than or equal to a size of resources occupied by two E-PDCCH units, and resources occupied by the E-PDCCH unit in a resource block pair comprise a part of resources of each resource block in the resource block pair, wherein when the E-PDCCH comprises multiple E-PDCCH units, the multiple E-PDCCH units belonging to a same E-PDCCH are mapped to different resource block pairs.

2. The method according to claim 1, wherein the multiple E-PDCCH units belonging to a same E-PDCCH are mapped to a same time-frequency resource position of the different resource block pairs.

3. The method according to any one of claims 1 to 2, wherein the obtaining the pre-determined position, comprises:
obtaining a pre-determined starting position which is of the E-PDCCH used for scheduling the terminal in the resource pair; or
obtaining the pre-determined position which is of the E-PDCCH unit of the E-PDCCH used for scheduling the terminal in the resource block pair.

4. The method according to any one of claims 1 to 3, wherein the obtaining the pre-determined position, comprises:
obtaining, in an explicit manner, the pre-determined position, which comprises:
receiving signaling sent to the terminal by a network side, wherein the signaling comprises the pre-determined position or the pre-determined position is deduced through the signaling.

5. The method according to any one of claims 1 to 3, wherein the obtaining the pre-determined position, comprises:
obtaining, in an implicit manner, the pre-determined position, wherein the pre-determined position of the E-PDCCH unit of the E-PDCCH used for scheduling the terminal in the resource block pair is agreed on with a network side; or a function relationship to indicate the pre-determined position of the E-PDCCH unit of the E-PDCCH used for scheduling the terminal in the resource block pair is agreed on with a network side.

6. A device adapted to receive an enhanced physical downlink control channel, E-PDCCH, wherein the E-PDCCH comprises at least one E-PDCCH unit, and the device comprises:
means for obtaining a pre-determined position to which an E-PDCCH unit of the E-PDCCH used for scheduling a terminal is mapped in a resource block pair; and
means for detecting, according to the pre-determined position, the E-PDCCH unit in the resource block pair, and obtaining the E-PDCCH used for scheduling the terminal,
wherein a size of resources of the resource block pair is greater than or equal to a size of resources occupied by two E-PDCCH units, and resources occupied by the E-PDCCH unit in a resource block pair comprise a part of resources of each resource block in the resource block pair, wherein when the E-PDCCH comprises multiple E-PDCCH units, the multiple E-PDCCH units belonging to a same E-PDCCH are mapped to different resource block pairs.

7. The device according to claim 6, wherein the multiple E-PDCCH units belonging to a same E-PDCCH are mapped to a same time-frequency resource position of the different resource block pairs.

8. The device according to any one of claims 6 to 7, wherein the means for obtaining the pre-determined position, comprises:
means for obtaining a pre-determined starting position which is of the E-PDCCH used for scheduling the terminal in the resource pair; or
means for obtaining the pre-determined position which is of the E-PDCCH unit of the E-PDCCH used for scheduling the terminal in the resource block pair.

9. The device according to any one of claims 6 to 8, wherein the means for obtaining the pre-determined position, comprises:
means for obtaining, in an explicit manner, the pre-determined position, which comprises:
means for receiving signaling sent to the terminal by a network side, wherein the signaling comprises the pre-determined position or the pre-determined position is deduced through the signaling.

10. The device according to any one of claims 6 to 9, wherein the means for obtaining the pre-determined position, comprises:
means for obtaining, in an implicit manner, the pre-determined position, wherein the pre-determined position of the E-PDCCH unit of the E-PDCCH used for scheduling the terminal in the resource block pair is agreed on with a network side; or a function relationship to indicate the pre-determined position of the E-PDCCH unit of the E-PDCCH used for scheduling the terminal in the resource block pair is agreed on with a network side.

11. A terminal comprising the device according to any one of claims 6-10.

## Patentansprüche

1. Verfahren zum Empfangen eines erweiterten physikalischen "Downlink"-Steuerkanals, E-PDCCH, wobei der E-PDCCH wenigstens eine E-PDCCH-Einheit umfasst und das Verfahren umfasst:
Erhalten (901), durch ein Endgerät, einer vorbestimmten Position, auf die eine E-PDCCH-Einheit des E-PDCCH, der für die Zeitplanung des Endgeräts verwendet wird,
in einem Ressourcenblockpaar abgebildet ist und die durch eine Netzseite mitgeteilt wird; und
Erkennen (902), durch das Endgerät gemäß der vorbestimmten Position, der E-PDCCH-Einheit in dem Ressourcenblockpaar und Erhalten des E-PDCCH, der für die Zeitplanung des Endgeräts verwendet wird,
wobei eine Größe von Ressourcen des Ressourcenblockpaares größer oder gleich einer Größe von Ressourcen ist, die von zwei E-PDCCH-Einheiten belegt sind, und Ressourcen, die von der E-PDCCH-Einheit in einem Ressourcenblockpaar belegt sind, einen Teil von Ressourcen jedes Ressourcenblocks in dem Ressourcenblockpaar umfassen, wobei, wenn der E-PDCCH mehrere E-PDCCH-Einheiten umfasst, die mehreren E-PDCCH-Einheiten, die zu demselben E-PDCCH gehören, auf unterschiedliche Ressourcenblockpaare abgebildet sind.

2. Verfahren gemäß Anspruch 1, wobei die mehreren E-PDCCH-Einheiten, die zu demselben E-PDCCH gehören, auf ein und dieselbe Zeitfrequenz-Ressourcenposition der unterschiedlichen Ressourcenblockpaare abgebildet sind.

3. Verfahren gemäß einem der Ansprüche 1 bis 2, wobei das Erhalten der vorbestimmten Position umfasst:
Erhalten einer vorbestimmten Startposition, die von dem E-PDCCH ist, der für die Zeitplanung des Endgeräts verwendet wird, in dem Ressourcenpaar; oder
Erhalten der vorbestimmten Position, die von der E-PDCCH-Einheit des E-PDCCH ist, der für die Zeitplanung des Endgeräts verwendet wird, in dem Ressourcenblockpaar.

4. Verfahren gemäß einem der Ansprüche 1 bis 3, wobei das Erhalten der vorbestimmten Position umfasst:
Erhalten, in einer expliziten Weise, der vorbestimmten Position, was umfasst:
Empfangen einer Signalisierung, die von einer Netzseite an das Endgerät gesendet wird, wobei die Signalisierung die vorbestimmte Position umfasst oder die vorbestimmte Position durch die Signalisierung abgeleitet wird.

5. Verfahren gemäß einem der Ansprüche 1 bis 3, wobei das Erhalten der vorbestimmten Position umfasst:
Erhalten, in einer impliziten Weise, der vorbestimmten Position, wobei die vorbestimmte Position der E-PDCCH-Einheit des E-PDCCH, der für die Zeitplanung des Endgeräts verwendet wird, in dem Ressourcenblockpaar mit einer Netzseite vereinbart wird; oder eine Funktionsbeziehung, um anzuzeigen, dass die vorbestimmte Position der E-PDCCH-Einheit des E-PDCCH, der für die Zeitplanung des Endgeräts verwendet wird, in dem Ressourcenblockpaar mit einer Netzseite vereinbart ist.

6. Vorrichtung, die dafür ausgelegt ist, einen erweiterten physikalischen "Downlink"-Steuerkanal, E-PDCCH, zu empfangen, wobei der E-PDCCH wenigstens eine E-PDCCH-Einheit umfasst und die Vorrichtung umfasst:
Mittel zum Erhalten einer vorbestimmten Position, auf die eine E-PDCCH-Einheit des E-PDCCH, der für die Zeitplanung eines Endgeräts verwendet wird, in einem Ressourcenblockpaar abgebildet ist; und
Mittel zum Erkennen, gemäß der vorbestimmten Position, der E-PDCCH-Einheit in dem Ressourcenblockpaar und Erhalten des E-PDCCH, der für die Zeitplanung des Endgeräts verwendet wird,
wobei eine Größe von Ressourcen des Ressourcenblockpaares größer oder gleich einer Größe von Ressourcen ist, die von zwei E-PDCCH-Einheiten belegt sind, und Ressourcen, die von der E-PDCCH-Einheit in einem Ressourcenblockpaar belegt sind, einen Teil von Ressourcen jedes Ressourcenblocks in dem Ressourcenblockpaar umfassen, wobei, wenn der E-PDCCH mehrere E-PDCCH-Einheiten umfasst, die mehreren E-PDCCH-Einheiten, die zu demselben E-PDCCH gehören, auf unterschiedliche Ressourcenblockpaare abgebildet sind.

7. Vorrichtung gemäß Anspruch 6, wobei die mehreren E-PDCCH-Einheiten, die zu demselben E-PDCCH gehören, auf ein und dieselbe Zeitfrequenz-Ressourcenposition der unterschiedlichen Ressourcenblockpaare abgebildet sind.

8. Vorrichtung gemäß einem der Ansprüche 6 bis 7, wobei das Mittel zum Erhalten der vorbestimmten Position umfasst:
Mittel zum Erhalten einer vorbestimmten Startposition, die von dem E-PDCCH ist, der für die Zeitplanung des Endgeräts verwendet wird, in dem Ressourcenpaar; oder
Mittel zum Erhalten der vorbestimmten Position, die von der E-PDCCH-Einheit des E-PDCCH ist, der für die Zeitplanung des Endgeräts verwendet wird, in dem Ressourcenblockpaar.

9. Vorrichtung gemäß einem der Ansprüche 6 bis 8, wobei das Mittel zum Erhalten der vorbestimmten Position umfasst:
Mittel zum Erhalten, in einer expliziten Weise, der vorbestimmten Position, was umfasst:
Mittel zum Empfangen einer Signalisierung, die von einer Netzseite an das Endgerät gesendet wird, wobei die Signalisierung die vorbestimmte Position umfasst oder die vorbestimmte Position durch die Signalisierung abgeleitet wird.

10. Vorrichtung gemäß einem der Ansprüche 6 bis 9, wobei das Mittel zum Erhalten der vorbestimmten Position umfasst:
Mittel zum Erhalten, in einer impliziten Weise, der vorbestimmten Position, wobei die vorbestimmte Position der E-PDCCH-Einheit des E-PDCCH, der für die Zeitplanung des Endgeräts verwendet wird, in dem Ressourcenblockpaar mit einer Netzseite vereinbart wird; oder eine Funktionsbeziehung, um anzuzeigen, dass die vorbestimmte Position der E-PDCCH-Einheit des E-PDCCH, der für die Zeitplanung des Endgeräts verwendet wird, in dem Ressourcenblockpaar mit einer Netzseite vereinbart ist.

11. Endgerät, umfassend die Vorrichtung gemäß einem der Ansprüche 6-10.

## Revendications

1. Procédé de réception d'un canal de commande de liaison descendante physique amélioré, E-PDCCH, l'E-PDCCH comprenant au moins une unité E-PDCCH, et le procédé comprenant :
obtenir (901), par un terminal, une position prédéterminée à laquelle une unité E-PDCCH de l'E-PDCCH utilisé pour programmer le terminal est mappée dans une paire de blocs de ressources, et qui est notifiée par un côté réseau ; et
détecter (902), par le terminal en fonction de la position prédéterminée, l'unité E-PDCCH dans la paire de blocs de ressources, et obtenir l'E-PDCCH utilisé pour programmer le terminal,
dans lequel une taille de ressources de la paire de blocs de ressources est supérieure ou égale à une taille de ressources occupées par deux unités E-PDCCH, et des ressources occupées par l'unité E-PDCCH dans une paire de blocs de ressources comprennent une partie de ressources de chaque bloc de ressources dans la paire de blocs de ressources, dans lequel, lorsque l'E-PDCCH comprend de multiples unités E-PDCCH, les multiples unités E-PDCCH appartenant à un même E-PDCCH sont mappées à différentes paires de blocs de ressources.

2. Procédé selon la revendication 1, dans lequel les multiples unités E-PDCCH appartenant à un même E-PDCCH sont mappées à une même position de ressources temps-fréquence des différentes paires de blocs de ressources.

3. Procédé selon l'une quelconque des revendications 1 et 2, dans lequel l'obtention de la position prédéterminée comprend :
obtenir une position de départ prédéterminée qui est celle de l'E-PDCCH utilisé pour programmer le terminal dans la paire de ressources ; ou
obtenir la position prédéterminée qui est celle de l'unité E-PDCCH de l'E-PDCCH utilisé pour programmer le terminal dans la paire de blocs de ressources.

4. Procédé selon l'une quelconque des revendications 1 à 3, dans lequel l'obtention de la position prédéterminée comprend :
obtenir, d'une manière explicite, la position prédéterminée, qui comprend :
recevoir une signalisation envoyée au terminal par un côté réseau, dans lequel la signalisation comprend la position prédéterminée ou la position prédéterminée est déduite par l'intermédiaire de la signalisation.

5. Procédé selon l'une quelconque des revendications 1 à 3, dans lequel l'obtention de la position prédéterminée comprend :
obtenir, d'une manière implicite, la position prédéterminée, dans lequel la position prédéterminée de l'unité E-PDCCH de l'E-PDCCH utilisé pour programmer le terminal dans la paire de blocs de ressources est fixée en accord avec un côté réseau ; ou une relation de fonction pour indiquer la position prédéterminée de l'unité E-PDCCH de l'E-PDCCH utilisé pour programmer le terminal dans la paire de blocs de ressources est fixée en accord avec un côté réseau.

6. Dispositif conçu pour recevoir un canal de commande de liaison descendante physique amélioré, E-PDCCH, l'E-PDCCH comprenant au moins une unité E-PDCCH, et le dispositif comprenant :
un moyen pour obtenir une position prédéterminée à laquelle une unité E-PDCCH de l'E-PDCCH utilisé pour programmer un terminal est mappée dans une paire de blocs de ressources ; et
un moyen pour détecter, en fonction de la position prédéterminée, l'unité E-PDCCH dans la paire de blocs de ressources, et obtenir l'E-PDCCH utilisé pour programmer le terminal,
dans lequel une taille de ressources de la paire de blocs de ressources est supérieure ou égale à une taille de ressources occupées par deux unités E-PDCCH, et des ressources occupées par l'unité E-PDCCH dans une paire de blocs de ressources comprennent une partie de ressources de chaque bloc de ressources dans la paire de blocs de ressources, dans lequel, lorsque l'E-PDCCH comprend de multiples unités E-PDCCH, les multiples unités E-PDCCH appartenant à un même E-PDCCH sont mappées à différentes paires de blocs de ressources.

7. Dispositif selon la revendication 6, dans lequel les multiples unités E-PDCCH appartenant à un même E-PDCCH sont mappées à une même position de ressources temps-fréquence des différentes paires de blocs de ressources.

8. Dispositif selon l'une quelconque des revendications 6 à 7, dans lequel le moyen pour obtenir la position prédéterminée comprend :
un moyen pour obtenir une position de départ prédéterminée qui est celle de l'E-PDCCH utilisé pour programmer le terminal dans la paire de ressources ; ou
un moyen pour obtenir la position prédéterminée qui est celle de l'unité E-PDCCH de l'E-PDCCH utilisé pour programmer le terminal dans la paire de blocs de ressources.

9. Dispositif selon l'une quelconque des revendications 6 à 8, dans lequel le moyen pour obtenir la position prédéterminée comprend :
un moyen pour obtenir, d'une manière explicite, la position prédéterminée, qui comprend :
un moyen pour recevoir une signalisation envoyée au terminal par un côté réseau, dans lequel la signalisation comprend la position prédéterminée ou la position prédéterminée est déduite par l'intermédiaire de la signalisation.

10. Dispositif selon l'une quelconque des revendications 6 à 9, dans lequel le moyen pour obtenir la position prédéterminée comprend :
un moyen pour obtenir, d'une manière implicite, la position prédéterminée, dans lequel la position prédéterminée de l'unité E-PDCCH de l'E-PDCCH utilisé pour programmer le terminal dans la paire de blocs de ressources est fixée en accord avec un côté réseau ;
ou une relation de fonction pour indiquer la position prédéterminée de l'unité E-PDCCH de l'E-PDCCH utilisé pour programmer le terminal dans la paire de blocs de ressources est fixée en accord avec un côté réseau.

11. Terminal comprenant le dispositif selon l'une quelconque des revendications 6 à 10.
